# EUROPÄISCHE PATENTANMELDUNG

(11) **EP 1 128 335 A2**
(43) Veröffentlichungstag der Anmeldung: **29.08.2001**
(21) Anmeldenummer: 01101911.4
(22) Anmeldetag: 27.01.2001
(51) Int. Cl.: G07C 9/00, E05B 49/00

(54) **Zugangskontrolleinrichtung**

(30) Priorität: 28.02.2000 DE 10009057
(71) Anmelder: Döbel, Klaus, 45239 Essen (DE)
(72) Erfinder: Döbel, Klaus, 45239 Essen (DE)
(74) Vertreter: Nunnenkamp, Jörg, Dr.

(57) **Zusammenfassung**

Gegenstand der Erfindung ist eine Zugangskontrolleinrichtung, welche mit wenigstens einer Schlüsseleinheit (2), zumindest einer Schlossanlage (3,4) und wenigstens einer Überwachungszentrale (8) ausgerüstet ist. Die Schlüsseleinheit (2) wird regelmäßig von einem Bediener mitgeführt. Die Schlossanlage (3,4) verschafft üblicherweise dem Bediener mit Hilfe der Schlüsseleinheit (2) Zugriff auf einen Sicherungsgegenstand (1), vorliegend ein mobiles Gefährt (1). Die Überwachungszentrale (8) kommuniziert zumindest mit der Schlossanlage (3,4). Außerdem überprüft die Überwachungszentrale (8) und/oder die Schlossanlage (3,4) wenigstens den Bediener und die Schlüsseleinheit (2) auf ihre Zugriffsberechtigung zum Sicherungsgegenstand bzw. mobilen Gefährt (1). Erfindungsgemäß übermittelt das mobile Gefährt (1) zumindest nach erfolgreichem Zugriff des identifizierten Bedieners zeit- und/oder orts- und/oder bedienerabhängige Nutzungsdaten an die Überwachungszentrale (8).

## Beschreibung

Die Erfindung betrifft eine Zugangskontrolleinrichtung, mit wenigstens einer Schlüsseleinheit, die regelmäßig von einem Bediener mitgeführt wird, zumindest einer Schlossanlage, welche üblicherweise dem Bediener mit Hilfe der Schlüsseleinheit Zugriff auf einen Sicherungsgegenstand verschafft, sowie zumeist im Innern des Sicherungsgegenstandes angeordnet ist und mit wenigstens einer Überwachungszentrale, die zumindest mit der Schlossanlage kommuniziert, wobei die Überwachungszentrale und/oder die Schlossanlage wenigstens den Bediener und die Schlüsseleinheit auf ihre Zugriffsberechtigung zum Sicherungsgegenstand hin überprüft.

Eine derartige Zugangskontrolleinrichtung ist durch die europäische Patentanmeldung 0 949 595 A2 bekannt geworden. Hier wird eine sogenannte "Multifunktions-Smartcard" beschrieben, die nicht nur als Schlüsseleinheit fungiert, sondern auch weitere Informationen tragen kann. Außerdem wird die Kommunikation mit einem (Rechner-) Netzwerk behandelt.

Daneben ist es aus der Praxis bekannt, ein mobiles Gefährt, beispielsweise ein Kraftfahrzeug, mit einer derartigen Karte berührungslos öffnen zu können. - Der Stand der Technik vermag nicht in allen Punkten zu überzeugen. So eröffnet der vorerwähnte Schlüsselersatz nur die Möglichkeit, ein einziges bestimmtes Kraftfahrzeug öffnen zu können. Im Übrigen fehlen hierbei die eingangs bereits beschriebenen Zusatzfunktionen. Folglich lässt sich eine flexible Nutzung beispielsweise eines Fahrzeugpools hiermit nicht darstellen.

Der Erfindung liegt das technische Problem zugrunde, eine Zugangskontrolleinrichtung des eingangs beschriebenen Aufbaus so weiter zu entwickeln, dass hiermit flexibel auf eine Vielzahl von (mobilen) Sicherungsgegenständen zurückgegriffen werden kann, wobei gleichzeitig die Zugangsfunktionen vereinfacht werden sollen.

Zur Lösung dieser Aufgabe schlägt die Erfindung bei einer gattungsgemäßen Zugangskontrolleinrichtung vor, dass der Sicherungsgegenstand als mobiles Gefährt, beispielsweise Kraftfahrzeug, Zug, Flugzeug, Fahrrad, Motorrad etc. ausgebildet ist und wenigstens nach erfolgreichem Zugriff des identifizierten Bedieners zeit- und/oder orts- und/oder bedienerabhängige Nutzungsdaten an die Überwachungszentrale übermittelt. In der Regel wird es sich bei diesen Nutzungsdaten um zeit- und orts- sowie bedienerabhängige Informationen handeln, die an die Überwachungszentrale - drahtgebunden oder drahtlos - gesendet werden.

Hierdurch wird die Überwachungszentrale u. a. in die Lage versetzt, ein bedienerabhängiges Nutzungsentgelt erheben zu können, welches die tatsächlichen Verhältnisse detailgetreu abbildet. Das heißt, es wird nicht nur die zeitliche Nutzung des mobilen Gefährtes durch den identifizierten Bediener berücksichtigt, sondern auch die jeweils zurückgelegte Wegstrecke. Die Überwachungszentrale ist also immer über das jeweilige mobile Gefährt, beispielsweise Kraftfahrzeug, den zugehörigen nutzenden und zuvor identifizierten Bediener, den Aufenthaltsort und die bisherige Nutzungszeit informiert.

In der Regel ist das mobile Gefährt mit einer Fahrsperre, insbesondere Wegfahrsperre ausgerüstet. Diese Fahrsperre lässt sich vorteilhaft mittels der Schlüsseleinheit entsperren. Dabei kann der beschriebene Entriegelungs- bzw. Entsperrvorgang mit einer weiteren Bedieneridentifikation flankiert werden, um sicherzustellen, dass tatsächlich nur der erfasste und registrierte Bediener in die Lage versetzt wird, das mobile Gefährt bzw. Kraftfahrzeug gegen Entgelt nutzen zu können.

Zur Identifizierung des Bedieners schlägt die Erfindung vor, biometrische Daten aufzunehmen, welche vorzugsweise von der Schlossanlage und/oder der Überwachungszentrale verarbeitet werden. Bei diesen biometrischen Daten kann es sich um einen Fingerabdruck, die Irisbeschaffenheit, das Sprachspektrum oder in Zukunft sogar die menschliche Erbmasse (DNS) handeln, die beispielsweise im Rahmen eines Speicheltestes gewonnen und ausgewertet wird. Jedenfalls ist zu diesem Zweck gefährtseitig zumeist eine spezielle Identifizierungseinrichtung vorgesehen, welche der Aufnahme der zuvor beschriebenen bedienerspezifischen Daten dient.

Diese Identifizierungseinrichtung übermittelt die erfassten bedienerspezifischen Daten an die Überwachungszentrale oder die Schlossanlage. Dies kann sowohl drahtlos als auch drahtgebunden erfolgen. In der Überwachungszentrale (oder der Schlossanlage) wird darauf folgend ein Abgleich mit jeweils hinterlegten bedienerspezifischen Daten vorgenommen, die sich zuvor angemeldet haben bzw. zur Nutzung des oder der mobilen Gefährte autorisiert sind.

Anders ausgedrückt, erfordert die beschriebene Zugangskontrolleinrichtung nicht nur die Bereitstellung und Erfassung eines Pools an verschiedenen mobilen Gefährten, sondern auch die Anmeldung potentieller Bediener bzw. Benutzer. Diese müssen sich in der Überwachungszentrale mit ihren bedienerspezifischen Daten, beispielsweise ihrem Fingerabdruck oder der Irisbeschaffenheit ihres Auges anmelden. Die solchermaßen gewonnnen Identifizierungsdaten des zugehörigen Bedieners werden in der Überwachungszentrale abgelegt und im Bedarfsfall für die Identifizierung des Bedieners in der beschriebenen Art und Weise eingesetzt und gegebenenfalls zum Vergleich an die Schlossanlage übermittelt.

Es ist aber auch möglich, zur Identifizierung des oder der Bediener einen Bedienercode zu vereinbaren. Dieser kann beispielsweise mit Hilfe einer Zusatzeinrichtung an die Schlossanlage oder auch gleich an die Überwachungszentrale übermittelt werden. In letztgenanntem Fall eröffnet die Erfindung die Möglichkeit, mit Hilfe der Zusatzeinrichtung die genaue örtliche Position eines Bedieners bzw. Benutzers zu erfassen. Diese Position kann mit dem ohnehin bekannten Aufenthaltsort des mobilen Gefährtes, zu welchem der betreffende Bediener Zugang wünscht, abgeglichen werden. Wenn nun noch der Bediener den "richtigen" Bedienercode an die Überwachungszentrale sendet, sorgt diese ihrerseits dafür, dass die Schlossanlage im mobilen Gefährt geöffnet wird, damit der Bediener den gewünschten Zutritt erhält.

Dabei kann der Bedienercode auch an den Bediener in der Weise beispielsweise seitens der Überwachungszentrale übermittelt werden, dass die nachfolgenden Schritte durchgeführt werden. In diesem Fall verfügt der Bediener also -(noch) nicht über den betreffenden Bedienercode, sondern muss diesen erst von der Überwachungszentrale abfragen. Hierbei ist es denkbar, dass der Bediener im Rahmen der Abfrage zunächst seine Geldinstitut-Verbindungsdaten an die Überwachungszentrale überträgt. Diese zieht daraufhin einen vom Bediener angegebenen Geldbetrag von dem betreffenden Geldinstitut als Abschlag ein oder lässt sich eine Abbuchungserlaubnis erteilen. Falls die erforderlichen Geldmittel zur Verfügung stehen, erhält der Bediener daraufhin eine Quittung seitens der Überwachungszentrale und gleichzeitig seinen Bedienercode, um das mobile Gefährt öffnen zu können. Grundsätzlich kann anstelle der Überwachungszentrale natürlich auch die Schlossanlage deren Funktion übernehmen.

In der Regel erteilt die Überwachungszentrale per Öffnung der Schlossanlage im mobilen Gefährt dem Bediener den gewünschten Zutritt. Alternativ hierzu sorgt die Zusatzeinrichtung für die Übertragung des Bedienercodes direkt zur Schlossanlage, die sich - wie gesagt - üblicherweise im oder am mobilen und gewünschten Gefährt befindet. Grundsätzlich kann es sich bei dieser Zusatzeinrichtung um ein handelsübliches Mobiltelefon handeln, welches einen Bedienercode in Form einer simplen Tastenkombination zur Verfügung stellt. Im erstgenannten Fall ist es darüber hinaus noch denkbar, dass dieses Mobiltelefon mit einer GPS-Einheit (Global Positioning System) ausgerüstet ist, so dass hierdurch die beschriebene Positionsbestimmung des zugangswilligen Bedieners gelingt. Allgemein ausgedrückt, kann die Zusatzeinrichtung im Ganzen mit der entsprechenden GPS-Ergänzungsfunktion ausgerüstet werden.

Immer ist gewährleistet, dass der Zugang zum Sicherungsgegenstand bzw. mobilen Gefährt letztlich nur dann gewährt wird, wenn zumindest zwei Bedingungen erfüllt sind. Zum einen muss der Bediener über eine zu der jeweils im Gefährt vorhandenen Schlossanlage passende Schlüsseleinheit verfügen. Zum anderen ist es erforderlich, dass dieser Bediener einwandfrei identifiziert wird und zudem von der Überwachungszentrale als autorisierter Bediener erkannt wird. Nur wenn diese Bedingungen erfüllt sind, wird der gewünschte Zugang zum mobilen Gefährt gewährt. Eine dritte Sicherungsstufe stellt dann noch die im Gefährt zumeist vorgesehene Wegfahrsperre dar, die nur von der passenden Schlüsseleinheit gegebenenfalls in Verbindung mit einer zusätzlichen Bedieneridentifikation außer Kraft gesetzt werden kann.

Immer hält die Überwachungszentrale gleichsam sämtliche Fäden in der Hand. Denn sie kann dafür sorgen, dass die Wegfahrsperre ein entsprechendes Öffnungs- bzw. Entriegelungssignal ebenso wie die Schlossanlage nur dann erhält, wenn die jeweils vorgeschalteten Identifizierungsroutinen zur Erkennung des Bedieners erfolgreich und zweifelsfrei durchlaufen worden sind. Das heißt, die Erfindung eröffnet den Weg einer gleichsam ferngesteuerten Öffnung des mobilen Gefährtes durch die Überwachungszentrale nachdem ein entsprechender Datenaustausch zwischen der Identifizierungseinrichtung und gegebenenfalls der Zusatzeinrichtung erfolgreich beendet worden ist.

Üblicherweise wird jedoch so vorgegangen, dass die zugehörigen Daten eines zugangswilligen Bedieners bzw. Benutzers an das Gefährt bzw. Kraftfahrzeug, und zwar eine dortige Rechnereinheit, übermittelt werden, so dass die vorbeschriebenen Berechtigungs- und Öffnungsroutinen direkt auf einen Dialog zwischen Bediener und/oder Schlüsseleinheit und Schlossanlage sowie Wegfahrsperre hinauslaufen.

Weiter schlägt die Erfindung vor, die Schlüsseleinheit mit einer Abrechnungs- und/oder Zahlungs- und/oder Geldspeicher- und/oder Nutzungsspeicherfunktion auszurüsten. Im Rahmen der Abrechnungsfunktion ist es denkbar, auf der Schlüsseleinheit die Benutzungsdauer, zugehörige Kosten etc., eventuell kalendarisch aufgeschlüsselt, abzulegen. Ein Bediener, der über die entsprechende Schlüsseleinheit verfügt, kann so auf einfache Weise einen Überblick über sämtliche Nutzungen eines oder mehrerer mobiler Gefährte bzw. Kraftfahrzeuge erhalten. Hierzu ist es lediglich erforderlich, die Schlüsseleinheit mit einem entsprechendem Lesegerät auszulesen.

Im Rahmen der Zahlungsfunktion können Bankabbuchungen, Einzugsermächtigungen, Monatslimits usw. vereinbart und gegebenenfalls geändert werden.

In die gleiche Richtung zielen Vorschläge der Erfindung, die Schlüsseleinheit mit einer Geldspeicherfunktion auszurüsten. Denn diese lässt sich praktisch ebenso handhaben, wie die bekannte Geldkarte. Mit anderen Worten kann die Schlüsseleinheit mit Geldspeicherfunktion an bestimmten ausgewiesenen Automaten aufgeladen werden, so dass dann ein entsprechender Betrag zur Verfügung steht, welcher im Rahmen der Gefährtnutzung gleichsam "abgefahren" wird. Außerdem eröffnen die Zahlungs- und Geldspeicherfunktion selbstverständlich noch weitere Optionen, die deckungsgleich mit denen sind, die eine normale Kreditkarte oder Geldkarte liefert. So lassen sich mit der Schlüsseleinheit Tickets, Hotels, Parkhäuser, Tankstellen usw. bezahlen. Auch liegt es im Rahmen der Erfindung, die Schlüsseleinheit als Ticketersatz bei Flügen, in Zügen und anderen Verkehrsmitteln einzusetzen. Gleiches gilt prinzipiell auch für den Fall, dass alternativ oder zusätzlich die beschriebene Geldspeicherfunktion von der Schlüsseleinheit dargestellt wird.

In Verbindung mit einem entsprechenden Kartenschreib/Lesegerät im mobilen Gefährt, welches zumeist als Schloss zum Entsperren der Wegfahrsperre dient, lassen sich weitere Funktionen vereinbaren. Denn durch die Kommunikation des mobilen Gefährtes mit der Überwachungszentrale und die Möglichkeit, einen entsprechenden Fahrzeugbediener bzw. -benutzer eindeutig festlegen und identifizieren zu können, ist es denkbar, dass das vorgenannte Kartenschreib/Lesegerät praktisch die Funktion einer mobilen Bank übernehmen kann. So lässt sich ein entsprechender Geldspeicher mobil innerhalb des Kraftfahrzeuges aufladen, wenn dies gewünscht wird. Hierzu ist es lediglich erforderlich, dass die Überwachungszentrale über entsprechende bedienerabhängige Kontoinformationen verfügt bzw. von vorneherein derartige Dienstleistungen als Quasi-Bank zur Verfügung stellt.

Die Nutzungsspeicherfunktion der Schlüsseleinheit deckt schließlich Zusatzfunktionen wie Lockbucharchivierung und -übertragung ab. Das heißt, hier können die Uhrzeit der Nutzung, der Bediener, die gefahrene Geschwindigkeit oder auch Sonderereignisse wie Tanken, Diebstahl, vertragswidriger Gebrauch usw. abgelegt werden.

Auch liegt es im Rahmen der Erfindung, die Schlüsseleinheit mit bedienerspezifischen und/oder gefährtspezifischen Daten auszurüsten. Die bedienerspezifischen Daten können Angaben über den zugehörigen Bediener beinhalten, so zum Beispiel Adresse, Telefonnummer usw. Auch ist es denkbar, hier die zuvor bereits erwähnten Identifizierungsdaten, beispielsweise den Fingerabdruck, abzulegen. Hierdurch ist gewährleistet, dass eine eineindeutige Zuordnung zwischen Schlüsseleinheit und korrespondierendem Bediener bzw. Benutzer gewährleistet ist.

Im Rahmen der gefährtspezifischen Daten kann beispielsweise eine Beschränkung auf bestimmte Wagentypen des ansonsten freizugänglichen Wagenpools stattfinden. Auch lassen sich hier beispielsweise Sitz- und/oder Spiegelposition ablegen, die automatisch gewährleisten, dass der zugehörige Fahrzeugbenutzer - unabhängig vom ausgewählten Gefährt - seine für ihn passende individuelle Sitzposition findet. Das heißt es lassen sich hierdurch grundsätzlich entsprechende Funktionen im oder am Sicherungsgegenstand bzw. Kraftfahrzeug auslösen.

Die vorerwähnten bedienerspezifischen bzw. gefährtspezifischen Daten lassen sich optional von der Überwachungszentrale über die Schlossanlage zur Schlüsseleinheit übertragen. Dies kann auch mit Hilfe des Kartenschreib-/Lesegerätes erfolgen, so dass der Speicherinhalt der Schlüsseleinheit flexibel an wechselnde Bedingungen angepasst werden kann. - Zumeist wird man jedoch so vorgehen, dass zumindest die bedienerspezifischen und gefährtspezifischen Daten voreingestellt werden und beispielsweise zur Überwachungszentrale hin eine Übermittlung erfahren.

Die Schlosseinheit und/oder das Kartenschreib-/Lesegerät kann mit einer Anzeigeeinrichtung, zum Beispiel einem Bildschirm, einer Sprachausgabe etc. ausgerüstet sein. Mit Hilfe dieser Anzeigeeinrichtung lassen sich die auf der Schlüsseleinheit befindlichen Daten für den Bediener hör- und/oder sichtbar machen. Auch wird hierdurch die Möglichkeit eröffnet, gegebenenfalls von der Überwachungszentrale übermittelte Daten anzuzeigen. Diese können zudem situationsbezogen ausgewählt werden. So ist es denkbar, die Anzeigeeinrichtung ortsabhängig mit einem entsprechenden Straßenkartenauszug zu füttern. Auch die Anzeige des nächstgelegenen Hotels oder Parkhauses lässt sich hierdurch realisieren. Selbstverständlich können derartige Nutzungsinformationen mit entsprechenden Werbebotschaften flankiert werden. Dies lässt sich alles flexibel von der Überwachungszentrale aus steuern, da diese genauestens über den Ort des mobilen Gefährtes unterrichtet ist. Ja selbst eine bedienerabhängige Werbe- und/oder Nutzungsansprache ist möglich, weil die Überwachungszentrale bekanntlich über wesentliche Daten des im Gefährt sitzenden Benutzers informiert ist, so dass Informationen übermittelt werden können, die speziell auf die Bedienerbedürfnisse, sei es nun in örtlicher, zeitlicher oder persönlicher Hinsicht, zugeschnitten sind.

Bei der Schlüsseleinheit handelt es sich regelmäßig um eine Multifunktions-Smartcard mit integrierter Antenne, gegebenenfalls Magnetstreifen und/oder zumindest einem Speicherchip. Diese Multifunktions-Smartcard kann dabei - wie beschrieben - normale EC-, Geld- oder Kreditkartenfunktion übernehmen. Die integrierte Antenne wirkt als passive Transpondereinheit und dient zusammen mit einem gefährtseitigen Sender der beschriebenen Zugangskontrolle (in Verbindung mit den weiteren Identifizierungsmaßnahmen des Bedieners). Außerdem wirkt die Multifunktions-Smartcard praktisch als Zündschlüsselersatz, weil ihr Einschieben in das gefährtseitige Kartenschreib-/Lesegerät die Wegfahrsperre außer Kraft setzt, wobei gleichzeitig die Zündschlüsselfunktion übernommen werden kann.

Bei der Schlosseinheit handelt es sich um eine die Schlüsseleinheit - vorliegend drahtlos - abfragende Sende/Empfangseinrichtung, die üblicherweise mit einem Rechner ausgerüstet ist. Grundsätzlich ist natürlich auch eine drahtgebundene Abfrage denkbar, die dann jedoch erfordert, dass die Schlüsseleinheit zumeist körperlich in einen zugehörigen Aufnahmeschlitz der Schlosseinheit eingesteckt wird, so dass der betreffende Datenaustausch zwischen Schlüsseleinheit und Schlosseinheit - diesmal kontaktgebunden - stattfinden kann.

Die Schlosseinheit kann zusätzlich mit der beschriebenen Identifizierungseinrichtung ausgerüstet werden. Das heißt, diese Identifizierungseinrichtung lässt sich in die Schlosseinheit integrieren, wenngleich natürlich auch ein diskreter Aufbau denkbar ist.

Schließlich ist vorgesehen, dass das mobile Gefährt zumeist vor Benutzungsaufnahme bei der Überwachungszentrale gebucht wird. Dies kann so geschehen, dass ein benutzungswilliger Bediener mit der Überwachungszentrale Kontakt aufnimmt und seinen entsprechenden Fahrwunsch äußert. Hier schlägt die Erfindung vor, die entsprechenden Daten beispielsweise über ein Callcenter telefonisch zur Überwachungszentrale hin zu übertragen. Selbstverständlich ist auch ein alphanumerischer Datenaustausch in dem Sinne denkbar, dass die betreffenden Datentelegramme als WAP (Wireless Application Protocol) von einem Mobiltelefon aus gesendet werden. Daneben eröffnet die Erfindung die Möglichkeit, über eine für den jeweiligen benutzungswilligen Bediener reservierte und beispielsweise durch ein Passwort geschützte InternetSeite in Dialog mit der Überwachungszentrale zu treten. Diese Möglichkeit eröffnet darüber hinaus die Option, auf der betreffenden Internetseite das oder die jeweils räumlich nächsten Gefährte bzw. Kraftfahrzeuge kartografisch darzustellen.

Jedenfalls können entsprechende Prüfungsdaten mit der Überwachungszentrale ausgetauscht werden, die nach erfolgter und zulässiger Buchung das jeweils ausgewählte Kraftfahrzeug für den gewünschten Zeitraum blockiert. Davor und danach sind natürlich Anschlussnutzungen oder vorgeschaltete Nutzungen unverändert möglich.

Sobald das entsprechende Fahrzeug von dem nutzungswilligen Bediener gebucht wurde, werden die korrespondierenden Daten an den gefährtseitigen Rechner, insbesondere Bordcomputer, seitens der Überwachungszentrale gesendet. Das heißt, nach entsprechender Buchung "weiß" das mobile Gefährt, wer, wann und wie lange das betreffende Kraftfahrzeug nutzen möchte. Folglich ist es in der Lage, die Identifizierung des Bedieners mit Hilfe der Schlosseinheit und/oder der Identifizierungseinrichtung vorzunehmen, da ja sämtliche benutzerrelevanten Daten mit der erfolgten Buchung zuvor an den Bordcomputer übertragen worden sind.

Daneben besteht natürlich grundsätzlich auch die Möglichkeit einer Spontanbuchung. In diesem Fall verfügt das gewünschte Kraftfahrzeug natürlich (noch) nicht über die benutzerrelevanten Daten. Diese werden erst dann von der Überwachungszentrale an das mobile Gefährt gesendet, wenn sich der nutzungswillige Bediener gegenüber dem Kraftfahrzeug identifiziert hat und diese Identifizierungsdaten mit den in der Überwachungszentrale hinterlegten Bedienerdaten abgeglichen worden sind. Jedenfalls wird auch in diesem Fall gewährleistet, dass tatsächlich nur der zuvor identifizierte Bediener entgeltlich belastet wird, und zwar je nach Nutzungsdauer und zumeist gefahrenen Kilometern.

Dabei ist es natürlich nicht unbedingt erforderlich, von vorneherein das Ende der Nutzung einzugeben. Sondern dieses wird vielmehr durch einen gleichsam Aus-Checkvorgang registriert und gegebenenfalls auf der Schlüsseleinheit mit sämtlichen Nutzungsdaten abgelegt und quittiert.

Immer wird im Rahmen der Erfindung eine Zugangskontrolleinrichtung zur Verfügung gestellt, die die entgeltliche Nutzung eines freivariablen Fahrzeugpools in einem Ausmaß gewährleistet, der bisher nicht für möglich gehalten wurde. Ein Bediener muss sich hierbei lediglich zur Nutzung anmelden, was impliziert, dass ein eineindeutiger bedienerspezifischer Datensatz erstellt und in der Überwachungszentrale hinterlegt wird. Sobald der zugehörige Bediener einen Fahrwunsch entweder durch eine vorgeschaltete oder spontane Buchung äußert, wird dieser bedienerspezifische Datensatz mit den seitens des gewünschten Kraftfahrzeuges erfassten Bedienerdaten verglichen. Nur für den Fall, dass der Bediener einwandfrei identifiziert worden ist und seine Schlüsseleinheit "passt", wird das Fahrzeug zugänglich geschaltet.

Eine weitere Sicherung findet sich in Gestalt der Fahrsperre, die nur dann außer Kraft gesetzt werden kann, wenn sich ihr gegenüber der betreffende Bediener ausweist und darüber hinaus noch über eine berechtigende Schlüsseleinheit verfügt. Folglich ist eine mehrfache Sicherung gegeben. Denn es ist denkbar, dass das Fahrzeug zwar den Zugang freigibt, die Wegfahrsperre jedoch nicht außer Kraft gesetzt werden kann.

Dadurch, dass sämtliche bediener- und fahrzeugspezifischen Daten orts- und zeitabhängig in der Überwachungszentrale zur Verfügung stehen, gelingt eine äußerst flexible und bequeme Abrechnung der Nutzung. Durch eine flächendeckende Versorgung mit zum Fahrzeugpool gehörigen Kraftfahrzeugen ist darüber hinaus ein schneller Zugriff gewährleistet. Dieser ist zudem nicht an speziell ausgewiesene Flächen gebunden, da das mobile Gefährt bzw. Kraftfahrzeug jederzeit von der Überwachungszentrale geortet werden kann. Folglich ist es auch für einen berechtigten Bediener problemlos möglich, entsprechende Positionsdaten abzufragen und das gewünschte Fahrzeug ortsabhängig auszuwählen und zu buchen.

Schließlich eröffnet die Kenntnis der Überwachungszentrale über die Position der zu ihr gehörigen Kraftfahrzeuge darüber hinaus die Option, eventuell entwendete Kraftfahrzeuge weiter zu verfolgen und entsprechende Mitteilungen an die Polizei zu versenden.

Dabei ist die Benutzung und Bedienung äußerst einfach, weil die Identifizierung zumeist über die Abtastung des Fingerabdrucks erfolgt. Dies geschieht in Millisekunden, so dass ein Fahrzeug unmittelbar nach Beendigung dieser Identifizierungsroutine geöffnet wird, wenn der benutzungswillige Bediener zusätzlich über die beschriebene, passende Schlüsseleinheit bzw. Multifunktions-Smartcard verfügt. Denn ein entsprechender Öffnungsdialog wird in Gang gesetzt, sobald sich der Bediener mit der Multifunktions-Smartcard im Sende-/Empfangsbereich der Schlosseinheit befindet.

Dabei kann die Schlüsseleinheit mit entsprechenden Daten ausgerüstet werden, die sie als nur zu einem einzigen Bediener gehörig ausweist. Daneben ist es jedoch auch denkbar, die Schlüsseleinheit bzw. Multifunktions-Smartcard so zu gestalten, dass es sich hier um einen gleichsam Universalschlüssel handelt, welcher grundsätzlich von jedermann benutzt werden kann (der gleichzeitig überhaupt berechtigt ist, Kraftfahrzeuge des Fahrzeugpools nutzen zu dürfen).

In der Regel wird man jedoch eine eineindeutige Zuordnung zwischen Schlüsseleinheit und zugehörigem Bediener anstreben, schon um die beschriebenen Zusatzfunktionen (Kreditkarte usw.) darstellen zu können. Es wird deutlich, dass ein Höchstmaß an Sicherheit gegeben ist, weil Schlüsseleinheit und Bediener praktisch eine Symbiose eingehen und nur beide zusammen im Sinne einer Undverknüpfung das Fahrzeug öffnen und starten können. Hierdurch ist gewährleistet, dass Fehlbuchungen, falsche Rechnungsstellungen usw. praktisch von vorneherein ausgeschlossen werden können. Darin sind die wesentlichen Vorteile der Erfindung zu sehen.

Im Folgenden wird die Erfindung anhand einer lediglich ein Ausführungsbeispiel darstellenden Zeichnung näher erläutert; die nachfolgende Zeichnung zeigt schematisch ein Kraftfahrzeug mit erfindungsgemäßer Zugangskontrolleinrichtung.

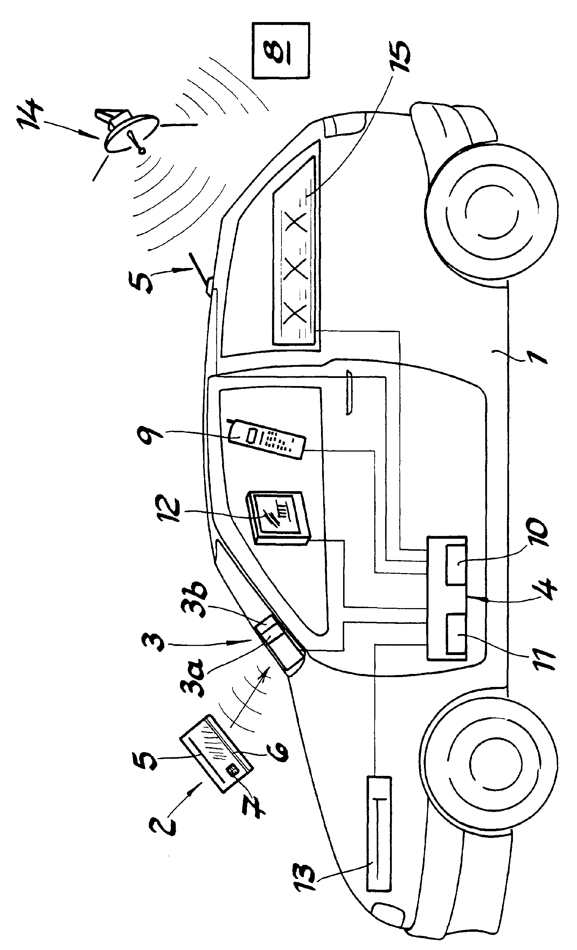

Mann erkennt in der einzigen Figur zunächst einmal ein mobiles Gefährt 1, bei dem es sich im Rahmen des Ausführungsbeispieles um ein Kraftfahrzeug 1 handelt. Grundsätzlich kann an dieser Stelle auch ein Zug oder sogar ein Flugzeug zum Einsatz kommen. Im Rahmen der Erfindung geht es jedoch primär darum, eine Zugangskontrolleinrichtung für ein oder mehrere Kraftfahrzeuge 1 zur Verfügung zu stellen, die eine zeit-, orts- und bedienerabhängige Nutzung dieses Kraftfahrzeuges 1 nach erfolgreichem Zugriff eines identifizierten Bedieners ermöglicht.

Zu diesem Zweck ist die Zugangskontrolleinrichtung in ihrem grundsätzlichen Aufbau mit einer Schlüsseleinheit 2 und einer Schlossanlage 3,4 im Innern des Kraftfahrzeuges 1 ausgerüstet, die nachfolgend im Einzelnen beschrieben werden. Bei der Schlüsseleinheit 2 handelt es sich im Rahmen des Ausführungsbeispiels um eine Multifunktions-Smartcard 2. Diese ist mit einer lediglich angedeuteten passiven Transpondereinheit 5 in Form einer Antenne 5 ausgerüstet und besitzt darüber hinaus einen angedeuteten Magnetstreifen 6 sowie schließlich einen Speicherchip 7.

Durch diese Multifunktionalität kann die Schlüsseleinheit bzw. Multifunktions-Smartcard 2 normale EC-, Geld- und/oder Kreditkartenoperationen vornehmen. Dies ist jedoch nicht zwingend.

Da die Multifunktions-Smartcard 2 insgesamt Scheckkartenformat hat, wird sie zumeist von einem benutzungswilligen Bediener in einer Geldbörse mitgeführt. Sobald sich dieser Bediener dem Kraftfahrzeug 1 nähert, erfolgt ein drahtloser Dialog zwischen der Schlüsseleinheit bzw. Multifunktions-Smartcard 2 und der Schlossanlage 3,4. Im Rahmen dieses Dialoges werden karten- und/oder bedienerabhängige Daten von der passiven Transpondereinheit bzw. Antenne 5 zur Schlossanlage 3,4 bzw. der zugehörigen Sende/Empfangseinrichtung 3 und dem daran angeschlossenen Rechner 4 bzw. Bordcomputer 4 übertragen.

Anhand dieser Daten lässt sich die Multifunktions-Smartcard 2 und gegebenenfalls der Bediener eindeutig identifizieren. Denn ein Zugang zum Kraftfahrzeug 1 wird erst dann eröffnet, wenn sich der Bediener zusätzlich gegenüber dem Kraftfahrzeug 1 erkenntlich macht. Hierzu dient eine Identifizierungseinrichtung 3a, welche Bestandteil der Sende-/Empfangseinrichtung 3 ist und sich - wie diese - im Bereich der Frontscheibe des Kraftfahrzeuges 1 befindet.

Im Rahmen des Ausführungsbeispiels ist die Identifizierungseinrichtung 3a als Fingerprintlesegerät ausgestaltet.

Mit Hilfe dieser Identifizierungseinrichtung 3a lässt sich im Rahmen des Ausführungsbeispiels der Fingerabdruck des benutzungswilligen Bedieners abtasten. Die hierdurch gewonnen biometrischen Daten werden mit im Bordcomputer 4 abgelegten Bedienerdaten verglichen. Diese Bedienerdaten gelangen in den Bordcomputer 4 im Rahmen des Dialogs zwischen der Multifunktions-Smartcard 2 und der Sende/Empfangseinrichtung 3. Denn die betreffenden Bedienerdaten sind auf der Multifunktions-Smartcard 2 abgelegt und weisen den zugangbegehrenden Bediener als einzig autorisierten Benutzer und Inhaber der Multifunktions-Smartcard 2 aus.

Grundsätzlich ist es auch denkbar, dass der Bordcomputer 4 über eine ohnehin vorhandene Antenne 5 am Kraftfahrzeug 1 in einen drahtlosen Dialog mit einer obligatorischen Überwachungszentrale 8 tritt. Sofern in dieser Überwachungszentrale 8 die bereits angesprochenen Bedienerdaten (Fingerabdruckdaten) abgelegt sind, können sie in den Bordcomputer 4 übertragen und und mit den an der Identifizierungseinrichtung 3a erfassten biometrischen Daten verglichen werden. Dies ist das normale Prozedere, wenn ein benutzungswilliger Bediener spontan Zugang zum Kraftfahrzeug 1 begehrt.

Daneben eröffnet die Erfindung die Möglichkeit, das entsprechende Kraftfahrzeug 1 vorab (beispielsweise per Internet) zu buchen. In diesem Fall werden die entsprechenden Bedienerdaten nach erfolgter Buchungsbestätigung vorab von der Überwachungszentrale 8 an den Bordcomputer 4 übergeben, wo sie unmittelbar zum Abgleich mit dem auf biometrischem Wege gewonnen Daten zur Verfügung stehen. Für den Fall, dass das Kraftfahrzeug 1 zuvor gebucht worden ist, findet sich noch eine Belegungsanzeige 3b als Bestandteil der Sende-/Empfangseinrichtung 3 im Bereich der Frontscheibe, welche Auskunft über den Status des Kraftfahrzeuges 1 gibt. Diese Belegungsanzeige 3b greift im Rahmen des Ausführungsbeispieles auf eine Anzeige mit Leuchtdioden zurück, die im einfachsten Fall die Zustände "belegt bzw. gebucht" oder "frei" signalisieren.

Anstelle des Zugangs durch Abgleich der biometrisch gewonnenen Daten mit den abgelegten Bedienerdaten kann auch ein Bediencode für die gewünschte Öffnung des Kraftfahrzeuges 1 sorgen. Dieser Bediencode wird im Rahmen des Ausführungsbeispiels durch eine Zusatzeinrichtung, vorliegend ein Mobiltelefon 9, an die Schlossanlage 3,4 bzw. die Überwachungszentrale 8 übermittelt, die ihrerseits bei berechtigtem Zugriff die Schlossanlage 3,4 freigibt.

Sofern also die Identifizierungs- bzw. Öffnungsroutine erfolgreich beendet wurde, gibt die Schlossanlage 3,4 eine hiervon beaufschlagte Zentralverriegelungsanlage frei, so dass der benutzungswillige Bediener das Kraftfahrzeug 1 besteigen kann. Da das Kraftfahrzeug 1 noch über eine Wegfahrsperre 10 verfügt, die vorliegend als Bestandteil des Bordcomputers 4 ausgewiesen ist, lässt sich eine weitere Sicherung erreichen.

Denn um diese Wegfahrsperre 10 überwinden zu können, ist es erforderlich, die Schlüsseleinheit bzw. Multifunktions-Smartcard 2 in ein entsprechendes und ebenfalls dem Bordcomputer 4 zugeordnetes Kartenschreib-/Lesegerät 11 einzuführen. Gleichzeitig kann eine nochmalige Bedieneridentifikation stattfinden, indem ein entsprechender Code mit Hilfe der Zusatzeinrichtung bzw. dem Mobiltelefon 9 ausgesendet wird oder wiederum eine Abfrage des Fingerabdruckes - diesmal seitens des Kartenschreib-/Lesegerätes 11 - vorgenommen wird. Jedenfalls erfordert die Inbetriebsetzung des Kraftfahrzeuges 1 sicherheitstechnisch die beschriebene Entsperrung der Fahrsperre bzw. Wegfahrsperre 10.

Gleichzeitig kann das Kartenschreib-/Lesegerät 11 für die Multifunktions-Smartcard 2 die Funktion eines Zündschlosses übernehmen. Das heißt, bei hierin eingesteckter Multifunktions-Smartcard 2 lässt sich das Kraftfahrzeug 1 einfach durch Bedienung eines Knopfes starten. Selbstverständlich liegt es im Rahmen der Erfindung, unverändert auf einen im Innern des Kraftfahrzeuges 1 zugänglichen Zündschlüssel zurückzugreifen. In diesem Zusammenhang ist es denkbar, diesen Zündschlüssel erst dann zugänglich zu machen, wenn die Wegfahrsperre 10 überwunden wurde.

An die Schlosseinheit 3,4 bzw. den Bordcomputer 4 ist eine Anzeigeeinrichtung 12 angeschlossen. Hierbei handelt es sich im Rahmen des Ausführungsbeispieles um einen (LCD-) Farbbildschirm, wenngleich alternativ oder zusätzlich auch eine Sprachausgabe denkbar ist. In gleicher Weise liegen natürlich auch Variationen dergestalt im Rahmen der Erfindung, dass die biometrische Identifizierung anhand der Sprache des Bedieners vorgenommen wird. Ebenso ist eine sprachgesteuerte Entriegelung der Wegfahrsperre 10 denkbar.

Jedenfalls sorgt die Anzeigeeinrichtung bzw. der Bildschirm 12 dafür, die auf der Schlüsseleinheit bzw. Multifunktions-Smartcard 2 befindlichen Daten für den Bediener sichtbar zu machen. Gleichzeitig ermöglicht die dargestellte Zugangskontrolleinrichtung die Übertragung von Daten seitens der Überwachungszentrale 8 über die Antenne 5 zum Bordcomputer 4 und schließlich auf den Farbbildschirm 12. Diese Daten können bediener- und/oder ortsabhängig vorselektiert werden, wie dies bereits beschrieben wurde.

Denn in die Antenne 5 ist ein Ortungsmodul (GPS) integriert. Dieses Ortungsmodul sendet laufend ortsabhängige Daten an die Überwachungszentrale 8, die auf diese Weise über den jeweiligen Ort des Kraftfahrzeuges 1 informiert ist. Folglich können auf umgekehrten Weg in der Überwachungszentrale 8 selektierte ortsabhängige Daten an das Kraftfahrzeug 1 gesendet werden.

Denkbar ist es hier beispielsweise, einen entsprechenden Stadtplanausschnitt auf dem Farbbildschirm 12 sichtbar zu machen. Auch nächstgelegene Hotels, Parkhäuser etc. lassen sich auf diese Weise visualisieren und dem Bediener zugänglich machen.

Schließlich findet sich noch ein Crashsensor 13, welcher im Falle eines Unfalls mittels des in die Antenne 5 integrierten Ortungsmodules orts- und bedienerabhängige Daten an die Überwachungszentrale 8 übermittelt, die diese zielgenau an die jeweils zuständige Polizeidienststelle weiterleiten kann.

Das Mobiltelefon 9 ermöglicht mit seiner obligatorischen Tastatur die Realisierung einer Eingabetastatur (in dem es in eine passende Halterung gesteckt wird), so dass in Verbindung mit dem Farbbildschirm 12 und dem Bordcomputer 4 im Fahrzeuginnern eine vollwertige Rechneranlage zur Verfügung steht. Diese Rechneranlage kann über die Antenne 5 und die Überwachungszentrale 8 - oder direkt über einen angepeilten Satelliten 14 weltweit mit anderen Rechnern in Kommunikation treten. So lassen sich problemlos alphanumerische Nachrichten (E-Mails, WAP-Datenfolgen usw.) vom Kraftfahrzeug 1 aus versenden. Gleichzeitig kann die Überwachungszentrale 8 in Dialog mit dem Fahrzeugbediener treten, um diesen gegebenenfalls nach seiner voraussichtlichen Nutzungsdauer zu fragen, die er auf dem beschriebenen Weg übermitteln kann, sofern dies nicht im Vorfeld bereits geschehen ist.

Selbstverständlich ermöglicht der Farbbildschirm 12 in Verbindung mit dem in die Antenne 5 integrierten Ortungsmodul die bekannte Funktionalität einer Navigationseinrichtung. Es versteht sich, dass das Kraftfahrzeug 1 im Falle einer solchen möglichen Option mit den hierzu erforderlichen Sensoren, beispielsweise Radsensoren, Tachosensor sowie gegebenenfalls Gyrometer, ausgestattet ist.

Daneben lässt sich das Kraftfahrzeug 1 auch als - gegebenenfalls ortsabhängiger - Werbeträger nutzen, in dem ein an der hinteren Heckscheibe vorgesehenes Werbemodul 15 von dem Bordcomputer 4 entsprechend beaufschlagt wird. Dieses Werbemodul 15 lässt sich durch übliche optische Anzeigevorrichtungen oder eine entsprechende (Metall-) Bedampfung der Heckscheibe realisieren. Jedenfalls können hiermit insbesondere ortsabhängig Werbebotschaften gesendet werden.

Die Abmeldung bzw. Beendigung der kostenpflichtigen Nutzung des Kraftfahrzeuges 1 und eine entsprechende Freigabemeldung an die Überwachungszentrale 8 wird zumeist dann vorgenommen bzw. angezeigt, wenn der Bediener das Kraftfahrzeug 1 endgültig verlässt. Dies geschieht im Rahmen des Ausführungsbeispiels aus dem Kraftfahrzeug 1 heraus, und zwar mittels der Zusatzeinrichtung bzw. des Mobiltelefones 9. Selbstverständlich sind auch andere Abmelderoutinen denkbar.

Zumeist wird jedoch ein entsprechender Abmeldecode an die Überwachungszentrale 8 übermittelt. - Sollte das Kraftfahrzeug 1 ohne Abmeldung verlassen werden, so wird es nach einer vorgegebenen Zeit automatisch verschlossen. Gleichzeitig läuft gegebenenfalls eine Check-Out-Routine ab.

## Patentansprüche

1. Zugangskontrolleinrichtung, mit wenigstens
- einer Schlüsseleinheit (2), die regelmäßig von einem Bediener mitgeführt wird,
- einer Schlossanlage (3,4), welche üblicherweise dem Bediener mit Hilfe der Schlüsseleinheit (2) Zugriff auf einen Sicherungsgegenstand (1) verschafft, und
- einer Überwachungszentrale (8), die zumindest mit der Schlossanlage (3,4) kommuniziert,
wobei die Überwachungszentrale (8) und/oder die Schlossanlage (3,4) wenigstens den Bediener und die Schlüsseleinheit (2) auf ihre Zugriffsberechtigung zum Sicherungsgegenstand (1) hin überprüft, **dadurch gekennzeichnet,** dass der Sicherungsgegenstand (1) als mobiles Gefährt (1) ausgebildet ist und wenigstens nach erfolgreichem Zugriff des identifizierten Bedieners zeit- und/oder orts- und/oder bedienerabhängige Nutzungsdaten an die Überwachungszentrale (8) übermittelt.

2. Zugangskontrolleinrichtung nach Anspruch 1, **dadurch gekennzeichnet**, dass das mobile Gefährt (1) mit einer Fahrsperre (10), insbesondere Wegfahrsperre (10), ausgerüstet ist, die mittels der Schlüsseleinheit (2) gegebenenfalls in Verbindung mit einer Bedieneridentifikation entsperrt wird.

3. Zugangskontrolleinrichtung nach Anspruch 1 oder 2, **dadurch gekennzeichnet**, dass zur Identifizierung des Bedieners biometrische Daten, zum Beispiel dessen Fingerabdruck, Irisbeschaffenheit, Sprachspektrum usw. aufgenommen und vorzugsweise von der Schlossanlage (3,4) und/oder der Überwachungszentrale (8) verarbeitet werden.

4. Zugangskontrolleinrichtung nach einem der Ansprüche 1 bis 3, **dadurch gekennzeichnet**, dass zur Identifizierung des Bedieners ein Bedienercode mittels einer Zusatzeinrichtung (9), zum Beispiel Mobiltelefon (9), an die Schlossanlage (3,4) bzw. die Überwachungszentrale (8) übermittelt wird.

5. Zugangskontrolleinrichtung nach einem der Ansprüche 1 bis 4, **dadurch gekennzeichnet**, dass die Schlüsseleinheit (2) mit Abrechnungs- und/oder Zahlungs- und/oder Geldspeicher- und/oder Nutzungsspeicherfunktionen ausgerüstet ist und/oder bedienerspezifische und/oder gefährtspezifische Daten trägt, die optional von der Überwachungszentrale (8) über die Schlossanlage (3,4) zur Schlüsseleinheit (2) übertragen werden, voreingestellt sind und/oder zur Überwachungszentrale (8) hin übermittelt werden bzw. entsprechende Funktionen im Sicherungsgegenstand (1) auslösen.

6. Zugangskontrolleinrichtung nach einem der Ansprüche 1 bis 5, **dadurch gekennzeichnet**, dass die Schlosseinheit (3,4) eine Anzeigeeinrichtung (12), zum Beispiel Bildschirm (12), Sprachausgabe etc. aufweist, die zumindest auf der Schlüsseleinheit (2) befindliche Daten für den Bediener hör- und/oder sichtbar macht sowie gegebenenfalls von der Überwachungszentrale (8) übermittelte Daten anzeigt.

7. Überwachungseinrichtung nach einem der Ansprüche 1 bis 6, **dadurch gekennzeichnet**, dass die Schlüsseleinheit (2) als Multifunktions-Smartcard (2) mit integriertem Transponder (5), insbesondere Antenne (5), gegebenenfalls Magnetstreifen (6) und/oder Speicherchip (7) ausgebildet ist.

8. Zugangskontrolleinrichtung nach einem der Ansprüche 1 bis 7, **dadurch gekennzeichnet**, dass die Schlosseinheit (3,4) als die Schlüsseleinheit (2) abfragende Sende/Empfangseinrichtung (3) mit Rechner (4) ausgebildet ist.

9. Zugangskontrolleinrichtung nach einem der Ansprüche 1 bis 8, **dadurch gekennzeichnet**, dass die Schlosseinheit (3,4) zusätzlich eine Identifizierungseinrichtung (3a), insbesondere ein Fingerprintlesegerät (3a), einen Augenirisabtaster, ein Spracherkennungsmodul oder dergleichen, aufweist.

10. Zugangskontrolleinrichtung nach einem der Ansprüche 1 bis 9, **dadurch gekennzeichnet**, dass das Gefährt (1) vor Benutzungsaufnahme bei der Überwachungszentrale (8) gebucht wird.
